# NEW EUROPEAN PATENT SPECIFICATION

(11) **EP 3 600 913 B2**
(45) Date of publication and mention of the opposition decision: **13.11.2024**
(45) Mention of the grant of the patent: 24.02.2021
(21) Application number: 18715551.0
(22) Date of filing: 22.03.2018
(51) Int. Cl.: B60B 23/08

(54) **WHEEL FOR A VEHICLE**
RAD FÜR FAHRZEUG
ROUE POUR VÉHICULE

(30) Priority: 29.03.2017 CH 4162017
(43) Date of publication of application: 05.02.2020
(73) Proprietor: Mubea Carbo Tech GmbH, 5020 Salzburg (AT)
(72) Inventor: RENNER, Christoph, 4824 Gosau (AT)
(74) Representative: Rentsch Partner AG
(86) International application number: PCT/EP2018/057367
(87) International publication number: WO 2018/177901

(56) References cited:
- EP-A1- 0 976 933
- EP-A1- 0 976 933
- EP-A2- 0 836 016
- EP-A2- 0 921 016
- WO-A1-03/037651
- WO-A1-03/037651
- WO-A1-2012/110560
- WO-A1-2014/023598
- WO-A1-2014/023598
- WO-A1-2015/106760
- WO-A1-2016/066161
- DE-U1- 20 317 196
- DE-U1- 202015 007 418
- US-A- 1 802 773
- US-A- 5 971 496
- US-A- 6 019 149

## Description

### FIELD OF THE INVENTION

The present invention relates to a wheel for a vehicle comprising a rim made of composite material and a wheel center made from the same or a different material, such as a lightweight metal alloy.

### BACKGROUND OF THE INVENTION

Light vehicle wheels are desirable to improve the driving quality and performance as well as to keep the overall vehicle weight low. Due to advances in material research, the wheel material is further shifted to light-metal and composite materials, which are light, durable and able to bear high loads at the same time. Hybrid-wheels made from a combination of fiber reinforced plastics as well as conventional materials, such as light weight metal alloys or different types of fiber reinforced plastics, provide very good results with respect of mechanical performance as well as aesthetic requirements. In these types of wheels, typically the wheel center and the rim are made as different entities and are then merged by interconnecting them with fastening means.

WO 2006/097856 A2 was published on 21.09.2006 on behalf of Dymag Racing UK Ltd. and discloses a vehicle wheel that comprises a rim made from a plastic material and a spoke unit or wheel disk made from a metal. The spoke unit or wheel disk is connected to the rim by means of at least one connecting element that is guided through the rim base.

WO 2016/066769 A1 was published on 06.05.2016 on behalf of the applicant of the present application. The document discloses a wheel that comprises a rim and a wheel center, the wheel center being interconnected with the rim. The rim comprises at least one first contact area and the wheel center comprises at least one second contact area which in a mounted state are aligned with respect to each other. An intermediate layer is arranged between the at least one first and the at least one second contact area, preventing at least partially direct contact between the at least one first and the at least one second contact are. Thus i.a. the life expectancy of the wheel can be increased.

WO 2016/066162 A1 was published on 06.05.2016 on behalf of ThyssenKrupp Carbon Components GmbH and discloses a method for producing a vehicle wheel with a connection between a rim and a wheel disc. The wheel disc is connected to the wheel rim by means of at least one connecting element that is guided through a through-hole of the rim base and is joined in the wheel disc. After the joining of the connecting element in the wheel disc the document proposes that a portion of the head of the connecting element remains projecting beyond the rim base on the outer side of the rim, and subsequently the head of the connecting element is at least partially removed.

WO 2016/066161 A1 was published on 06.05.2016 on behalf of ThyssenKrupp Carbon Components GmbH and discloses a vehicle wheel having a wheel rim and a wheel disc which is connected to an inner side of the wheel rim, wherein the wheel disc is connected to the wheel rim by means of at least one connecting element which is guided through a through-hole of the rim base and is inserted in the wheel disc. The through-hole is arranged in the tire seat of the rim base and the connecting element, which is guided through, is joined substantially in the direction of the radial extension of the wheel disc which is associated to the tire seat on the inner side of the rim. The document also discloses a method for producing a vehicle wheel wherein the connection between wheel rim and wheel disc is produced in the region of the tire seat of the rim base, and, after the insertion of the connecting element into the wheel disc, a portion of the connecting element, which protrudes the contour of the outer side of the rim of the tire seat, is shaped so that the connecting element is adjusted to conform to the contour of the outer side of the rim of the tire seat.

WO 2016/037611 A1 was published on 17.03.2016 on behalf of ThyssenKrupp Carbon Components GmbH and shows a vehicle wheel comprising a wheel rim and a wheel disc. The document discloses a connecting element that connects a wheel disc and a wheel rim, wherein the connecting element is guided through a through-channel of the wheel disc. The connecting element is coaxially surrounded by an elongated sleeve whereby the elongated sleeve is designed and arranged such that it interlockingly extends into a corresponding recess of the wheel disc. The document discloses various embodiments of elongated sleeves, including sleeves directed to be used for countersunk screw-bolts, the elongated sleeves having a conically widened boundary area to receive the countersunk head of the screw-bolts.

### SUMMARY OF THE INVENTION

Multipart wheel designs comprising an interconnected rim and a wheel center thereto offer the possibility of using different materials for the rim and the wheel center and to design and arrange the material of the components in an optimized manner. In particular this allows to obtain wheels with low weight and low moment of inertia by combining rims made from especially light materials with wheel centers made from more conventional materials. Furthermore, two part wheels enable certain designs of the wheel center that cannot be realized with wheels made in one part. In addition pairings of different metals, including magnesium, aluminum, titanium or steel, may be chosen. Within the context of the present invention, "aluminum", "magnesium" and "titanium" should be understood as meaning also their alloys.

The invention as disclosed herein is particularly advantageous if used for wheels having a wheel center that comprises a wheel star with spokes. However, the invention may also be advantageous for certain types of wheels that have a wheel center which is a wheel disc. Hence, within the context of the present invention, "wheel center" should be understood as to include any type of wheel center, such as spoke structures - respectively wheel spiders - or wheel disks.

The usage of composite materials may decrease the mass and moment of inertia of wheels even more if compared to designs using metals only. As such, fiber reinforced plastics comprising e.g. glass fibers, carbon fibers, aramid fibers, basalt fibers or combinations thereof may be used for rims and/or wheel centers. Such types of wheels made from fiber reinforced plastics and metals can be referred to as "hybrid wheels". A first type of hybrid wheels comprises a wheel center made from a metal, while the rim is made from a fiber reinforced plastic. A second type comprises a rim made from a metal, while the wheel center is made from a fiber reinforced plastic.

A major drawback of many wheels made from multiple materials is that the load transfer between wheel center and rim in many cases turns out to be critical, which particularly holds true for wheels comprising rims made from fiber reinforced plastics. In these wheels typically fastening means such as screws extend from the wheel center via an opening in the rim to the outer (centrifugal) side of the rim, where the fastening means is typically mechanically interconnected with the rim surface, as e.g. by means of a head portion. This usually results in a localized load transfer and consequently stress concentration in the rim in a region adjacent to the fastening means - a region which typically is already weakened by the opening where the fastening means are arranged. In order to optimize load transfer and to reduce stress concentration in the rim one typically tries to distribute load by means of specially designed fastening means. In particular screws with relatively large heads show potential for such optimization.

However, using such types of screws (respectively fastening elements) may not be appropriate for certain types of wheels. As such, the maximum spatial dimensions of the head of a fastening means will typically be limited by the complex geometry of the rim. As well, using screws with relatively large heads may effect high local stresses in the rim if there is an (even small) angular misalignment between the screw and the rim. In addition, even when using sleeves as known from the prior art, load transfer between a fastening means' head and the adjacent rim via the sleeve in many cases still leads to critical stress in the rim. This in particular holds true for rims made from composite materials, especially for rims made from fiber reinforced plastics comprising layers for reinforcing fibers. In such types of rims conventional sleeves known from the prior art, having conically widened boundary areas may lead to critical interlaminar stresses as the contact angles between the sleeve and the layers of fibers are constant in the through-thickness direction of the rim, which may cause delamination. As well, when using sleeves having conically widened boundary areas, already minor angular misalignment between a fastening means and a receiving conical recess in the rim will lead to either only partial contact between the sleeve and the recess or to highly unbalanced load distribution in the peri-sleeve rim.

Hence it is one object of the present invention provide a hybrid-type of wheel for a vehicle that has an improved load transfer between the wheel center and the rim, allowing a more even distribution of stress/strain in the rim at the connecting regions and hence has an increased operational safety as well as service life.

It is a further object of the present invention to provide a hybrid-type of wheel for a vehicle that is easier to assemble and allows easy mounting and dismounting of a tire.

A wheel according to the present invention typically comprises a rim that is at least partially made from a fiber reinforced plastic. The rim may be made from a fiber reinforced plastic in which the fibers are at least partially aligned in layers. However, the present invention is not limited to such types of fiber reinforced plastics. The rim has an inner side directed to the hub region of the wheel, as well as an outer side directed centrifugally away from the hub region of the wheel. As well, the wheel comprises a wheel center which is interconnected with the inner side of the rim by at least one fastening means. The fastening means may e.g. be a screw or a bolt. The fastening means may e.g. be mechanically interconnected with the wheel center by means of a positive locking and/or an adhesive agent. The at least one fastening means penetrates the rim via at least one opening that extends from the inner side of the rim to the outer side of the rim. Such an opening, respectively through-hole, may e.g. be a bore. According to the invention the opening comprises a recess (respectively enlarging or widening) arranged at the outer side of the rim. The wheel further comprises at least one bushing arranged coaxially with the at least one fastening means and at which least partially surrounds the at least one fastening means. The bushing comprises a flange which is arranged to align with a head of the at least one fastening means. The flange has a first outer face that is at least partially convex and arranged to align (in a mounted state) with the recess arranged at the outer side of the rim.

A wheel with a particularly high mechanical competence may be obtained if the bushing comprises a sleeve portion that protrudes from the flange and in a mounted state at least partially surrounds the fastening means and thereby penetrates the rim via the at least one opening that extends from the inner side tot the outer side of the rim, wherein the sleeve portion penetrates an opening arranged at the wheel center. Hence critical shear stresses in the fastening means can be avoided.

A particularly even and to a certain extent adjustable load transfer between the bushing and the adjacent rim is obtained by the first outer face having a spherical curvature. Good results for a variety of wheel geometries may be obtained if the spherical curvature has a radius of between 10 mm and 20 mm, in particular of about 15 mm. Using a bushing that has a first outer face with a spherical curvature allows to obtain an arrangement similar to a ball joint. Such an arrangement allows to compensate for minor angular misalignments between the fastening means and the rim due to production tolerances or occurring during service life of the wheel due to thermal expansion, creeping or other effects.

For some applications, the flange of the bushing may comprise a bearing recess arranged to receive at least part of a head of the at least one fastening means. Hence proper alignment of the fastening means with respect to the bushing can be improved and load transfer between the fastening means and the bushing can be controlled. Alternatively or in addition, also other parts of the fastening means may be received by such a bearing recess.

Assembly of a wheel may be simplified if the at least one fastening means has a countersunk head that corresponds with the bearing recess of the bushing when in an assembled state. Particularly easy assembly as well as good load transfer may be obtained if the at least one countersunk head has a first inner chamfer angle of about 90° (degrees of arc). However, for some types of wheel the at least one fastening means may have a cylindrical head that corresponds with the bearing recess when in an assembled state. Alternatively, the at least one fastening means may also have a round head that corresponds with the bearing recess when in an assembled state.

In a variation of a wheel according to the present invention the flange may have a second outer face which in a mounted state is directed away from the outer side of the rim. The second outer face may have a conical shape. Thus, mounting or dismounting of a tire on the wheel may be assisted, as will be explained in more detail below. Good results may be obtained if the second outer face has a second inner chamfer angle of between 100° and 110° (degrees of arc).

A wheel with a particularly long service life may be obtained if the fastening means and the bushing are interconnected with each other by an adhesive agent. Alternatively or in addition, the fastening means and/or- the bushing may also be interconnected with the rim and/or the wheel center by means of an adhesive agent.

Load transfer between the wheel center and the rim, respectively the fastening means and the rim, may be improved if in addition to the bushing as described herein, also an intermediate layer is arranged between the wheel center and the inner side of the rim. Good results may be obtained if the at least one intermediate layer comprises at least one load bearing area/section. In order to improve protection against corrosion, the intermediate layer may further comprise at least one sealing area, which prevents intrusion and accumulation of corrosion-enhancing substances in the interstitial space between the wheel center and the rim. Therefore, the at least one sealing area may be arranged circumferentially of the intermediate layer. Thus direct load transfer from the wheel center to the inner side of the rim as well as via a fastening means to the outer side of the rim can to a certain extent be adjusted and misalignments as described above can be accounted for.

Particularly good results may be obtained if an intermediate layer is used as described in the international patent application Nr. PCT/EP2015/075172 entitled "wheel for a vehicle" filed on 29 October 2015 by the applicant and published as WO 2016/066769 A1 on 6 May 2016.

For some applications a cover means may be arranged at the outer side of the rim, the cover means at least partially covering the fastening means and the bushing. Hence, loss of pressurized air from the tire-wheel volume may be decreased, as well as interlocking of a tire and the fastening means and/or the bushing during mounting or dismounting of the tire may be prevented.

Good results may be obtained if the bushing is made from a material that has a lower Young's modulus than the fastening means.

In a variation of a wheel according to the present invention, a coupling layer may be arranged between the flange of the bushing and the rim (respectively recess). Hence, stress concentration in the interfacial region may be reduced and thus load transfer be improved. Good results may be obtained if the coupling layer is made from a rubber or silicone material.

For some applications, the fastening means and the bushing may be formed as a one piece structure, hence be integrally made.

It is to be understood that both the foregoing general description and the following detailed description present embodiments, and are intended to provide an overview or framework for understanding the nature and character of the invention.

The accompanying drawings are included to pro-vide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- **Fig. 1**: schematically shows a first embodiment of a wheel according to the invention in a first perspective view;
- **Fig. 2**: schematically shows the wheel of **Fig. 1** in a second perspective view;
- **Fig. 3a**: schematically shows detail D of **Fig. 2****;**
- **Fig. 3b**: schematically shows detail D of **Fig. 2****,** the fastening means and bushing being removed for illustrative purposes;
- **Fig. 4**: schematically shows a first embodiment of a fastening means and a bushing according the present invention in a perspective view;
- **Fig. 5**: schematically shows the fastening means and the bushing of **Fig. 4** in a frontal view;
- **Fig. 6**: shows section JJ of **Fig. 5**;
- **Fig. 7**: shows the bushing of **Fig. 4** in a first perspective view;
- **Fig. 8**: shows the bushing of **Fig. 4** in a second perspective view;
- **Fig. 9**: schematically shows a cross-section though an embodiment of a wheel according to the present invention to schematically illustrate the interconnecting region;
- **Fig. 10**: shows detail E of **Fig. 9****.**

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this invention will satisfy applicable legal requirements. Whenever possible, like reference numbers will be used to refer to like components or parts.

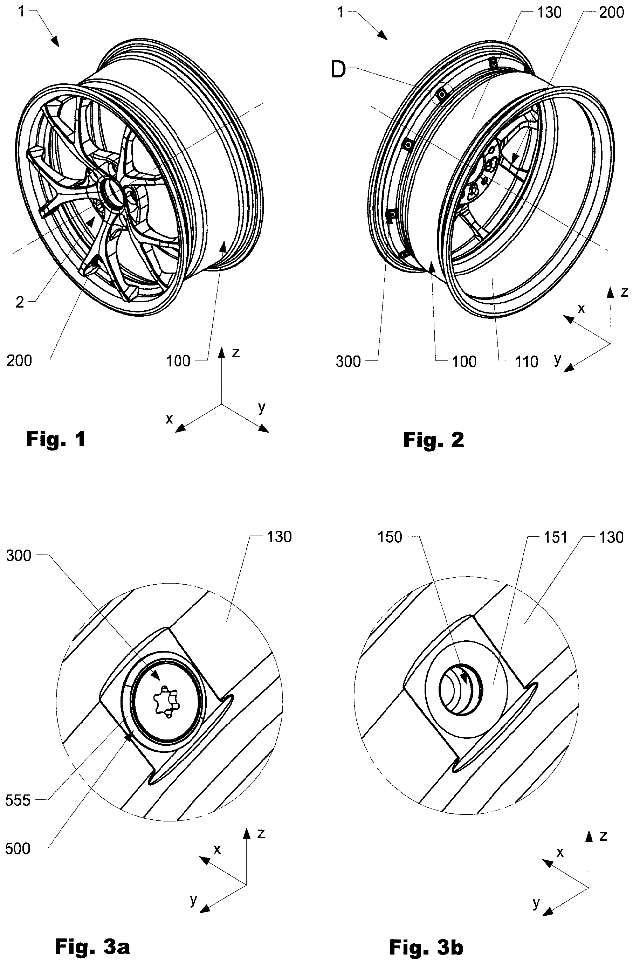

**Fig. 1** and **2** show a first embodiment of a wheel 1 according to the present invention. The wheel 1 comprises a wheel center 200 with a hub region 2, as well as a rim 100. The wheel center 200 of the embodiment shown is a spoke structure essentially made from a lightweight metal alloy, whereas the rim 100 is made from a fiber reinforced plastic. However, the present invention is not limited to such types of wheels. As illustrated in **Fig. 2** and shown in more detail in **Figs. 3a** and **3b****,** in the wheel 1 shown the rim 100 and the wheel center 200 are mechanically interconnected by multiple fastening means 300, which are countersunk screws. As well, in the embodiment of a wheel 1 shown the fastening means 300 is partially arranged in a bushing 500 which will be shown and explained in more detail below. As can be seen in **Fig. 3b****,** the rim 100 comprises an opening 150 that protrudes the rim 100 and extends from the inner side 110 to the outer side 130 of the rim. The opening 150 of the embodiment shown further comprises a recess 151 to receive a flange 550 of the bushing 500, as will be shown in more detail below. The recess 151 is curved and has a spherical curvature corresponding to the shape of the flange 550 of the bushing 500, as will be explained in more detail below.

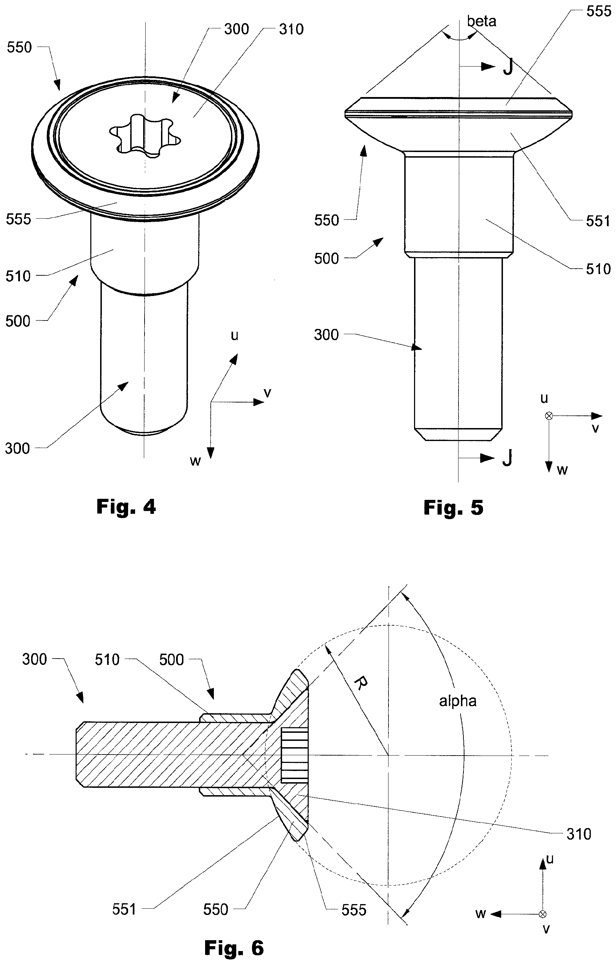

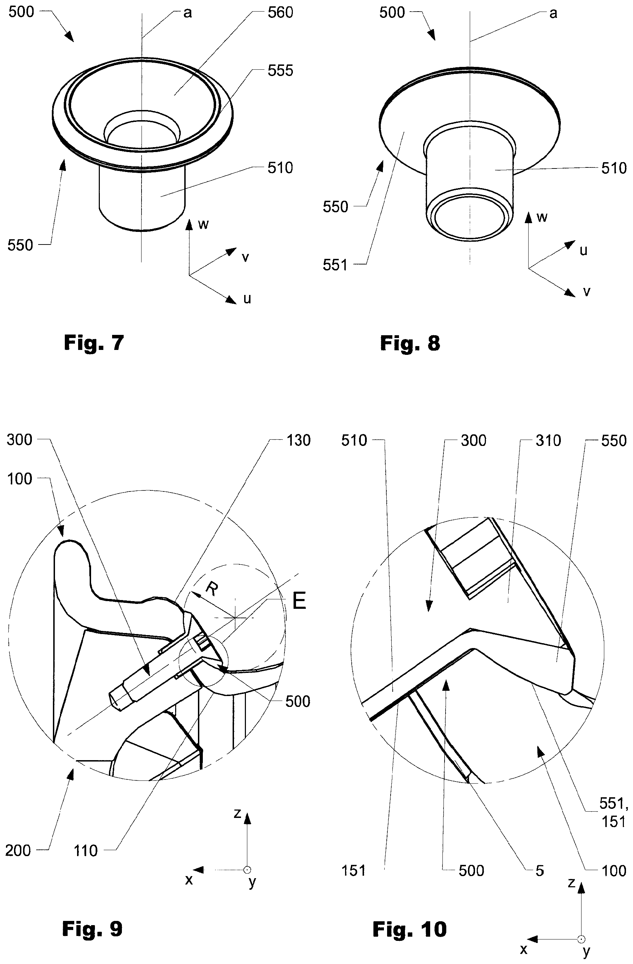

Figs. 4 to 6 show an embodiment of an assembly comprising a fastening means 300 and a bushing 500. The embodiment of a bushing 500 shown comprises a flange 550 that has a first outer face 551 which is arranged for load transfer to the rim (not shown). The first outer face 551 of the embodiment of a bushing 500 shown has a convex shape, namely it has a spherical curvature with a specified radius R, as illustrated in Fig. 6 and also indicated in Fig. 7. As well, the embodiment of a bushing 500 shown comprises a second outer face 555 which in a mounted state is directed away from the outer side 130 of the rim 100, as shown e.g. in Fig. 3a and subsequent Fig. 10. This second outer face 555 has a conical shape having a second inner chamfer angle beta, which helps to prevent interlocking between a tire (not shown) and the fastening means 300 during mounting or dismounting of a tire. As shown, the embodiment of a fastening means 300 shown is a countersunk type of screw having a head 310 with a first inner chamfer angle alpha that the embodiment shown is about 90° (degrees of arc). In a mounted state, the head 310 of the fastening means 300 is arranged in a bearing recess 560 (shown in Fig. 7) of the bushing 500, which corresponds to the inner first inner chamfer angle alpha of the fastening means' head 310. In addition, the variation of an embodiment of a bushing 500 shown in Figs. 4 et sqq. Comprises a cylindrical sleeve portion 510 that protrudes from the flange 550 and which in a mounted state surrounds the shaft of the fastening means 300.

**Figs. 9** and **10** schematically show a connecting region between the rim 100 and the wheel center 200 of an embodiment of a wheel 1 according to the present invention. The wheel 1 shown comprises a fastening means 300 embodied as a countersunk screw and which penetrates the rim 100 via an opening 150 that extends from the inner side 110 of the rim 100 to the outer side 130 of the rim 100 and which fastening means 300 is screwed in a bore arranged in the wheel center 200. A bushing 500 is arranged coaxially with the fastening means 300 and thereby surrounds the fastening means 300. The flange 550 further comprises a first outerface 551 that has a spherical curvature as explained in more detail above. In the assembled state shown, the first outer face 551 is arranged in a recess 151 (also shown in **Fig. 3b**) of the opening 150 which has curvature that at essentially corresponds to the curvature of the first outer face 551. The head 310 of the fastening means 300 is arranged in a bearing recess 560 in a flange 550 of the bushing 500. As can be seen, the sleeve portion 510 of the bushing 500 is arranged in the opening 150 and protrudes into the bore arranged in the wheel center 200. Hence bending moments, respectively shear stress in the fastening means 300 can be significantly reduced.

As indicated in **Fig.10****,** an intermediate layer 5 is arranged between the wheel center 200 and the inner side 110 of the rim 100 in order to optimize load transfer as well as to prevent corrosion effects. As visible in **Fig. 10****,** due to the curvature of the first outer face 551 of the flange 550 the contact angle between first outer face 551 and the rim 100 varies, depending on the distance from the central axis a of the flange 550. At the same time such an arrangement acts similar to a ball joint by compensating for angular misalignments between fastening element 300 when mechanically interconnected with the wheel center 200 and the opening 150 arranged at the rim 100. Thus, load transfer between the head 310 of the fastening element 300, respectively the flange 550 of the bushing 500, and the rim 100 can be optimized, leading to less stress concentration. In particular interlaminar stress in the rim 100 can be reduced, which else may cause delamination in the region adjacent to the opening 150.

Rather, the words used in the specification are words of description rather than limitation, and it is understood that various changes may be made without departing from the scope of the invention.

### List of Designations

- 1: Wheel
- 2: Hub region
- 5: Intermediate layer
- 100: Rim
- 110: Inner side
- 130: Outer side
- 150: Opening
- 151: Recess
- 200: Wheel center
- 300: Fastening means
- 310: Head
- 500: Bushing
- 510: Sleeve portion
- 550: Flange
- 551: First outer face (for load transfer)
- 555: Second outer face (chamfer)
- 560: Bearing recess
- a: Central axis of the bushing
- alpha: First inner chamfer angle
- beta: second inner chamfer angle

## Claims

1. A wheel (1) comprising
a. a rim (100) that is at least partially made from a fiber reinforced plastic; the rim (100) having an inner side (110) directed to the hub region (2) of the wheel (1); and an outer side (130) directed centrifugally away from the hub region (2) of the wheel (1); and
b. a wheel center (200) interconnected with the inner side (110) of the rim (100) by means of at least one fastening means (300); the at least one fastening means (300) penetrating the rim (100) via at least one opening (150) that extends from the inner side (110) of the rim (100) to the outer side (130) of the rim (100); the opening (150)comprising a recess (151)arranged at the outer side (130) of the rim (100); and
c. at least one bushing (500) arranged coaxially with the at least one fastening means (300) and at least partially surrounding the at least one fastening means (300); wherein the bushing (500) comprises a flange (550) arranged to align with a head (310) of the at least one fastening means (300);
**characterised in that**
d. the flange (550) has a first outer face (551) that is at least partially convex and arranged to align (in a mounted state) with the recess (151)arranged at the outer side (130)of the rim (100)and wherein the first outer face (551) has a spherical curvature.

2. The wheel (1) according to claim 1, **wherein** the spherical curvature has a radius of 15 mm.

3. The wheel (1) according to any one of the preceding claims, **wherein** the flange (550) of the bushing (500) comprises a bearing recess (560) arranged to receive at least part of a head (310) of the at least one fastening means (300).

4. The wheel (1) according to claim 3, **wherein** the at least one fastening means (300) has a countersunk head (310) that corresponds with the bearing recess (560) when in an assembled state.

5. The wheel (1) according to claim 3, **wherein** the at least one countersunk head (310) has a first inner chamfer angle (alpha) of about 90° (degrees of arc).

6. The wheel (1) according to claim 3, **wherein** the at least one fastening means (300) has a cylindrical head that corresponds with the bearing recess (560) when in an assembled state.

7. The wheel (1) according to claim 3, **wherein** the at least one fastening means (300) has a round head that corresponds with the bearing recess (560) when in an assembled state.

8. The wheel (1) according to any one of the preceding claims, **wherein** the flange (550) has a second outer face (555) in a mounted state directed away from the outer side (130) of the rim (100).

9. The wheel (1) according to claim 8, **wherein** the second outer face (555) is shaped conically.

10. The wheel (1) according to claim 9, **wherein** the second outer face (555) has a second inner chamfer angle (beta) of between 100° and 110° (degrees of arc).

11. The wheel (1) according to any one of the preceding claims, **wherein** the fastening means (300) and the bushing (500) are interconnected with each other by an adhesive agent.

12. The wheel (1) according to any of the preceding claims, **wherein** an intermediate layer (5) is arranged between the wheel center (200) and the inner side (110) of the rim (100).

13. The wheel (1) according to claim 12, **wherein** the at least one intermediate layer (5) comprises at least one load bearing area/section.

14. The wheel (1) according to any one of claims 12 and 13, **wherein** the intermediate layer (5) comprises at least one sealing area.

15. The wheel (1) according to claim 14, **wherein** the at least one sealing area is arranged circumferentially of the intermediate layer (5).

## Patentansprüche

1. Rad (1), umfassend:
a. eine Felge (100), die zumindest teilweise aus einem faserverstärkten Kunststoff hergestellt ist; wobei die Felge (100) eine Innenseite (110), die zum Nabenbereich (2) des Rads (1) hin gerichtet ist, und eine Außenseite (130) aufweist, die zentrifugal vom Nabenbereich (2) des Rads (1) weg gerichtet ist; und
b. eine Radmitte (200), die mit der Innenseite (110) der Felge (100) mithilfe von zumindest einem Befestigungsmittel (300) verbunden ist; wobei das zumindest eine Befestigungsmittel (300) die Felge (100) durch zumindest eine Öffnung (150) durchdringt, die von der Innenseite (110) der Felge (100) zur Außenseite (130) der Felge (100) verläuft; wobei die Öffnung (150) eine Aussparung (151) umfasst, die an der Außenseite (130) der Felge (100) angeordnet ist; und
c. zumindest eine Buchse (500), die koaxial mit dem zumindest einen Befestigungsmittel (300) angeordnet ist und das zumindest eine Befestigungsmittel (300) zumindest teilweise umgibt; wobei die Buchse (500) einen Flansch (550) umfasst, der zur Ausrichtung an einem Kopf (310) des zumindest einen Befestigungsmittels (300) angeordnet ist;
**dadurch gekennzeichnet, dass**
d. der Flansch (550) eine erste Außenseitenfläche (551) aufweist, die zumindest teilweise konvex ist und zur Ausrichtung (in einem montierten Zustand) an der Aussparung (151) angeordnet ist, welche an der Außenseite (130) der Felge (100) angeordnet ist und wobei die erste Außenseitenfläche (551) sphärisch gekrümmt ist.

2. Rad (1) nach Anspruch 1, wobei die sphärische Krümmung einen Radius von 15 mm aufweist.

3. Rad (1) nach einem der vorhergehenden Ansprüche, wobei der Flansch (550) der Buchse (500) eine Lageraussparung (560) umfasst, die zum Aufnehmen von zumindest einem Teil eines Kopfs (310) des zumindest einen Befestigungsmittels (300) angeordnet ist.

4. Rad (1) nach Anspruch 3, wobei das zumindest eine Befestigungsmittel (300) einen versenkten Kopf (310) aufweist, der in einem zusammengebauten Zustand der Lageraussparung (560) entspricht.

5. Rad (1) nach Anspruch 3, wobei der zumindest eine versenkte Kopf (310) einen ersten inneren Fasenwinkel (Alpha) von ungefähr 90° (Bogengrad) aufweist.

6. Rad (1) nach Anspruch 3, wobei das zumindest eine Befestigungsmittel (300) einen zylindrischen Kopf aufweist, der in einem zusammengebauten Zustand mit der Lageraussparung (560) übereinstimmt.

7. Rad (1) nach Anspruch 3, wobei das zumindest eine Befestigungsmittel (300) einen runden Kopf aufweist, der in einem zusammengebauten Zustand mit der Lageraussparung (560) übereinstimmt.

8. Rad (1) nach einem der vorhergehenden Ansprüche, wobei der Flansch (550) eine zweite Außenseitenfläche (555) aufweist, die in einem zusammengebauten Zustand von der Außenseite (130) der Felge (100) weg gerichtet ist.

9. Rad (1) nach Anspruch 8, wobei die zweite Außenseitenfläche (555) konisch geformt ist.

10. Rad (1) nach Anspruch 9, wobei die zweite Außenseitenfläche (555) einen zweiten inneren Fasenwinkel (Beta) zwischen 100° und 110° (Bogengrad) aufweist.

11. Rad (1) nach einem der vorhergehenden Ansprüche, wobei das Befestigungsmittel (300) und die Buchse (500) durch ein Haftmittel miteinander verbunden sind.

12. Rad (1) nach einem der vorhergehenden Ansprüche, wobei eine Zwischenschicht (5) zwischen der Radmitte (200) und der Innenseite (110) der Felge (100) angeordnet ist.

13. Rad (1) nach Anspruch 12, wobei die zumindest eine Zwischenschicht (5) zumindest einen tragenden Bereich/Teilabschnitt umfasst.

14. Rad (1) nach einem der Ansprüche 12 und 13, wobei die Zwischenschicht (5) zumindest einen Dichtungsbereich umfasst.

15. Rad (1) nach Anspruch 14, wobei der zumindest eine Dichtungsbereich umfänglich an der Zwischenschicht (5) angeordnet ist.

## Revendications

1. Roue (1) comprenant
a. une jante (100) qui est au moins partiellement composée d'un plastique renforcé aux fibres, la jante (100) comportant une face interne (110) dirigée vers la zone du moyeu (2) de la roue (1) ; et une face externe (130) dirigée en étant éloignée de manière centrifuge de la zone du moyeu (2) de la roue (1) ; et
b. un centre de roue (200) interconnecté avec la face interne (110) de la jante (100) au moyen d'au moins un moyen de fixation (300) ; l'au moins un moyen de fixation (300) pénétrant dans la jante (100) par au moins une ouverture (150) qui s'étend de la face interne (110) de la jante (100) à la face externe (130) de la jante (100) ; l'ouverture (150) comprenant un retrait (151) disposé au niveau de la face externe (130) de la jante (100) ; et
c. au moins une douille (500) disposé coaxialement avec l'au moins un moyen de fixation (300) et entourant au moins partiellement l'au moins un moyen de fixation (300) ; le douille (500) comprenant une bride (550) disposée de manière à être alignée avec une tête (310) de l'au moins un moyen de fixation (300) ;
**caractérisée en ce que**
d. la bride (550) a une première face externe (551) qui est au moins partiellement convexe et disposée pour aligner 32 (en état monté) avec le retrait (151) pratiqué au niveau de la face externe (130) de la jante (100) et dans laquelle la première face externe (151) est courbée sphériquement.

2. Roue (1) selon la revendication 1, dans laquelle la courbure sphérique a un rayon de 15 mm.

3. Roue (1) selon une quelconque des revendications précédentes, dans laquelle la bride (550) du douille (500) comprend un retrait porteur (560) conçu pour recevoir au moins une partie d'une tête (310) de l'au moins un moyen de fixation (300).

4. Roue (1) selon la revendication 3, dans laquelle l'au moins un moyen de fixation (300) comporte une tête fraisée (310) qui correspond au retrait porteur (560) en état assemblé.

5. Roue (1) selon la revendication 3, dans laquelle l'au moins une tête fraisée (310) a un premier angle de chanfrein interne (alpha) d'environ 90° (degrés d'arc).

6. Roue (1) selon la revendication 3, dans laquelle l'au moins un moyen de fixation (300) comporte une tête cylindrique qui correspond au retrait porteur (560) en état assemblé.

7. Roue (1) selon la revendication 3, dans laquelle l'au moins un moyen de fixation (300) comporte une tête ronde qui correspond au retrait porteur (560) en état assemblé.

8. Roue (1) selon une quelconque des revendications précédentes, dans laquelle la bride (550) a une deuxième face externe (555) détournée en état monté de la face externe (130) de la jante (100).

9. Roue (1) selon la revendication 8, dans laquelle la deuxième face externe (555) a une forme conique.

10. Roue (1) selon la revendication 9, dans laquelle la deuxième face externe (555) a une deuxième angle de chanfrein interne (bêta) de 100° à 110° (degrés d'arc).

11. Roue (1) selon une quelconque des revendications précédentes, dans laquelle le moyen de fixation (300) et le douille (500) sont interconnectés l'un à l'autre par un agent adhésif.

12. Roue (1) selon une quelconque des revendications précédentes, dans laquelle une couche intermédiaire (5) est disposée entre le centre de roue (200) et la face interne (110) de la jante (100).

13. Roue (1) selon la revendication 12, dans laquelle l'au moins une couche intermédiaire (5) comprend au moins une zone/section de portage de charge.

14. Roue (1) selon une quelconque des revendications 12 et 13, dans laquelle la couche intermédiaire (5) comprend au moins une zone d'étanchéité.

15. Roue (1) selon la revendication 14, dans laquelle l'au moins une zone d'étanchéité est disposée en circonférence de la couche intermédiaire (5).
